# EUROPEAN PATENT APPLICATION

(11) **EP 3 984 832 A1**
(43) Date of publication of application: **20.04.2022**
(21) Application number: 20201789.3
(22) Date of filing: 14.10.2020
(51) Int. Cl.: B60R 21/12, B60R 21/02, E05D 1/02, B60J 1/06

(54) **PERSONAL BARRIER WITH FLAP CONNECTED BY LIVING HINGE**

(71) Applicant: SABIC Global Technologies B.V., 4612 PX Bergen op Zoom (NL)
(72) Inventor: Davis, Michael,John, 6160 GA Geleen (NL); Arora, Munish, 6160 GA Geleen (NL); VAN DER WAL, John, Hendricus, 6160 GA Geleen (NL)
(74) Representative: Sabic Intellectual Property Group

(57) **Abstract**

A system that defines a personal barrier, having: a panel with a panel bottom end, a panel top end, a panel forward end and a panel aft end, the panel defines: a panel stationary portion; a first living hinge connected to the panel stationary portion, the first living hinge being located between the panel top and bottom ends, and the first living hinge including inset hinge grooves; and a flap connected to the first living hinge; the first living hinge is configured for being in a flexed state, whereby the flap is pivoted against the panel stationary portion, and an unflexed state, whereby the flap is planar with the panel stationary portion; and a panel support connected to the panel stationary portion for securing the panel stationary portion to a support structure.

## Description

### BACKGROUND

The disclosed embodiments relate to protective enclosures and dividers, and more specifically to a protective personal barrier with a flap connected by a living hinge, and a method of making the same.

Protective enclosures may be utilized in certain types of automotive transportation that provide high light transmission, low optical distortion, and meet various government regulations. In view of certain government regulations, a driver, such as a bus driver, should have clear line-of-site to the passenger side of a bus. It may also be desired to protect the bus driver from passengers that may be carrying a contagion onboard. It may similarly be desired to protect passengers from other passengers travelling in planes, trains, buses or cabs.

### SUMMARY

Disclosed, in various embodiments, is a protective panel with a flap connected by a living hinge, and a method of forming the same.

A system that defines a personal barrier is disclosed, including: a panel, wherein the panel extends in a longitudinal direction from a panel bottom end to a panel top end, and in a transverse direction, from a panel forward end to a panel aft end, wherein the panel defines: a panel stationary portion; a first living hinge operationally connected to the panel stationary portion, wherein the first living hinge is longitudinally located between the panel top and bottom ends, and wherein the first living hinge includes hinge grooves that: are inset in a depth direction into the first living hinge; extend in the transverse direction; and are spaced apart from each other in the longitudinal direction; and a flap operationally connected to the first living hinge, wherein the first living hinge is configured for being in a flexed state, whereby the flap is pivoted against the panel stationary portion, and an unflexed state, whereby the flap is planar with the panel stationary portion; and a panel support operationally connected to, or formed as part of, the panel stationary portion for securing the panel stationary portion to a support structure of the motorized passenger carrier.

A method is disclosed of forming a system that defines a personal barrier, including: forming a panel, wherein the panel extends in a longitudinal direction from a panel bottom end to a panel top end, and in a transverse direction from a panel forward end to a panel aft end; wherein forming the panel includes: forming a panel stationary portion; forming a first living hinge connected to the panel stationary portion, wherein the first living hinge is longitudinally located between the panel top and bottom ends, and wherein the first living hinge includes hinge grooves that: are inset in a depth direction into the first living hinge; extend in the transverse direction; and are spaced apart from each other in the longitudinal direction; and forming a flap connected to the first living hinge, wherein the first living hinge is configured for being in a flexed state, whereby the flap is pivoted against the panel stationary portion, and an unflexed state, whereby the flap is planar with the panel stationary portion; and operationally connecting a panel support, to or forming the panel support as part of, the panel stationary portion for securing the panel stationary portion to a support structure of the motorized passenger carrier.

These and other features and characteristics are more particularly described below.

### BRIEF DESCRIPTION OF THE DRAWINGS

The following is a brief description of the drawing wherein like elements are numbered alike and which is presented for the purposes of illustrating the exemplary embodiments disclosed herein and not for the purposes of limiting the same.
FIG. 1 is a schematic diagram representing a panel with a flap connected by a living hinge, in a window-closed state.
FIG. 2 is a schematic diagram representing a panel with a flap connected by a living hinge, in a window-opened state.
FIG. 3A is a schematic diagram representing a living hinge utilized in the panel of FIGS. 1-2, in a flexed state.
FIGS. 3B and 3C are partial cross-sectional views of simplified diagrams representing cross-sections of a living hinge with one or more rectangular grooves.
FIG. 4A is a schematic diagram representing another panel with a flap connected by a living hinge, in a window-closed state.
FIG. 4B is a schematic diagram representing another panel with a flap connected by a living hinge, where the panel defines a partial return, in a window-opened state.
FIG. 4C is a schematic diagram representing another panel with a flap connected by a living hinge, where the panel defines a complete return, in a window-opened state.
FIG. 5 is a schematic diagram representing another panel secured to a panel support.
FIG. 6 is a schematic diagram representing the panel of FIG. 5, showing additional aspects thereof.
FIG. 7 is a schematic diagram representing a panel support utilized for the panel of FIG. 5.
FIG. 8 is a schematic diagram representing the panel support of FIG. 7, showing additional details thereof.
FIG. 9 is a flowchart showing method of forming a system that defines a personal barrier with a flap connected by a living hinge.

### DETAILED DESCRIPTION

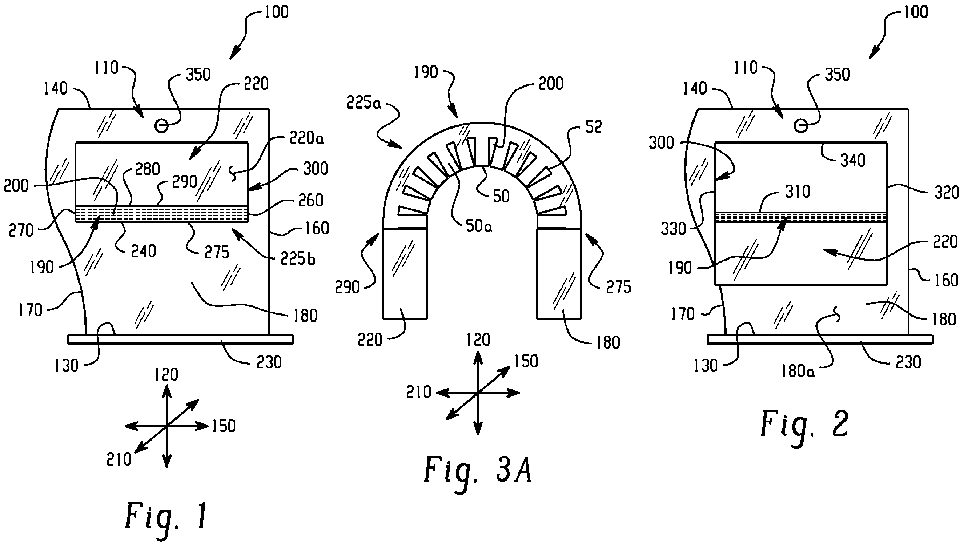

Turning to FIGS. 1-2, disclosed is a system 100 that forms a personal barrier, for separating people, e.g., in a motorized passenger carrier, such as a bus. The system 100 includes a panel 110. The panel 110 may extend in a longitudinal direction 120 from a panel bottom end 130 to a panel top end 140. The panel 110 may also extend in a transverse direction 150 from a panel forward end 160 to a panel aft end 170. As shown, the longitudinal and transverse directions 120, 150 are substantially perpendicular to each other.

In one embodiment, the panel 110 defines, e.g., a panel stationary portion 180. The panel 110 may also define a first living hinge 190 (or living hinge mechanism) operationally connected to the panel stationary portion 180. The first living hinge 190 may be longitudinally located in the panel 110 between the panel top and bottom ends 140, 130.

With reference to FIG. 3A, the first living hinge 190 may include hinge grooves 200, also shown schematically in FIG. 1. The hinge grooves 200 may be inset in a depth direction 210 into the first living hinge 190. The hinge grooves 200 may extend in the transverse direction 150 along the first living hinge 190. The hinge grooves 200 may be spaced apart from each other in the longitudinal direction 120.

For example, the first living hinge 190 can be a thin flexible hinge (i.e., flexure bearing) made from the same material as the panel 110. In other words, one side of the panel 110 may be a single unitary sheet, while the other side of the panel 110 comprises the first living hinge 190 formed into the panel 110. The first living hinge 190 can be melt pressed, routed to allow the more rigid pieces of the panel 110 connected by the first living hinge 190 to bend along the line of the first living hinge 190.

The first living hinge 190 can comprise one or more of the grooves 200, for example, two or more grooves, for example, 4 or more grooves, for example, 6 or more grooves (e.g., 4 to 20 grooves, preferably 6 to 15 grooves, or 6 to 10 grooves). A cross-sectional shape of the grooves 200 of the first living hinge 190 can be polygonal (e.g., square, rectangular, or triangular, i.e., not rounded), or rounded (e.g., semi-circular, or semi-elliptical), or a combination thereof, preferably the cross-sectional shape of the grooves 200 is polygonal, more preferably rectangular.

A differential between a thickness of the panel 110 and a depth of each groove 200 can be greater than or equal to 0.3 millimeters (mm); that is, the thickness of the panel 110 at the groove 200 can be greater than or equal to 0.3 mm. Adjacent grooves 200 can be spaced 0.2 millimeters to 2.0 millimeters apart, for example, 0.2 millimeters to 1.0 millimeters apart, for example, 0.4 millimeters to 0.7 millimeters apart. A width of each groove 200, measured parallel to the length of the panel 110, can be 0.4 to 2.0 times a thickness of the panel 110, for example, 0.4 to 0.6 times a thickness of the panel 110, for example, 0.5 times a thickness of the panel 110. A range of motion of the first living hinge 190 can be greater than or equal to 0 degrees, for example, from 0 to 90 degrees, for example, from 0 to 180 degrees, e.g., based upon the plane of the panel 110 such that 0° is no bend. The first living hinge 190 can have a range of motion of greater than 90°, preferably 90 to 180°.

The panel 110 may define a flap 220 (or flap portion) (FIGS 1-2). The flap 220 may be operationally connected to the first living hinge 190. The first living hinge 190 may be configured for being in a flexed state 225a (FIG. 3A). In the flexed state 225a, the flap 220 may be pivoted against the panel stationary portion 180. The first living hinge 190 may also be configured for being in an unflexed state 225b (FIG. 1). In the unflexed state, the flap 220 may be oriented so that it is planar with the panel stationary portion 180.

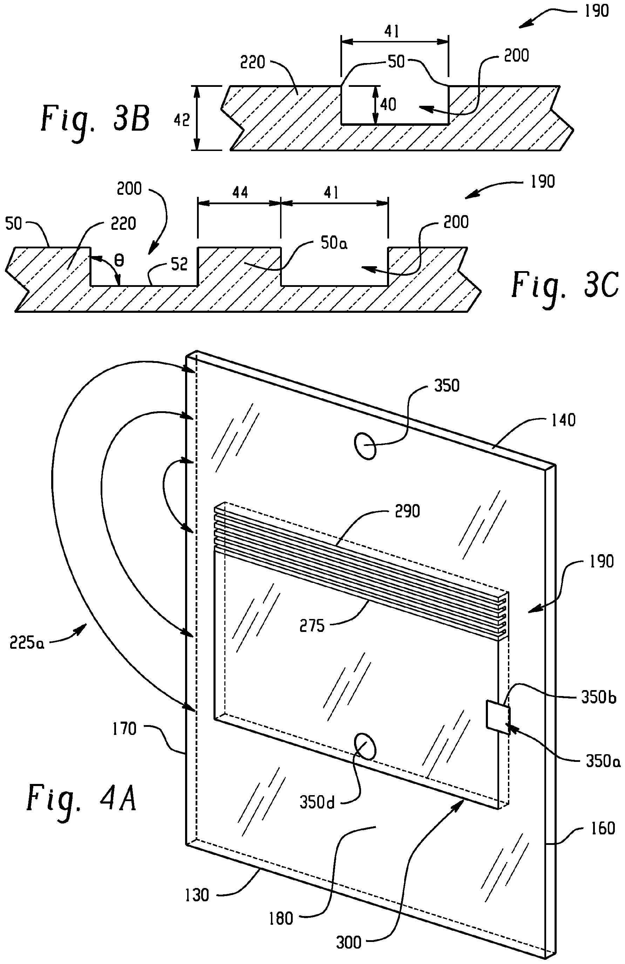

Turning to FIGS. 3B-3C, the grooves 200 can protect the first living hinge 190 from damage while the flap 220 is being folded via the living hinge 190 over a range of motion. For example, when the first living hinge 190 is folded, outer edges 50 defined by projections 50a respectively formed between adjacent grooves 200 move toward each other, decreasing the width 41 of the groove 200 at the opening. The combination of the width 41 of the grooves 200, the depth 40 of the grooves 200, e.g., to an inset base 52 of the grooves 200, relative to a depth 42 of the projections 50a, which may be the same as that of the rest of the panel 110, and the spacing 44 between the grooves 200, determine how much the projections 50a can angulate Θ (theta) relative to the inset base 52. This in turn determines how far the flap 220 can bend, from 0° to 180° (degrees). For example, FIG. 3A illustrates a flap opened to an angle of 180° relative to its closed position shown in FIG. 1. Preferably, the flap 220 can open 180°, and at 180°, the edges 50 of each groove 200 are in physical contact. This contact provides support to the panel 110, preventing excessive bending and/or stretching of the material that forms the base of the groove 200. Hence, the depth and width of the grooves 200 and the spacing between the grooves 200 are preferably chosen to enable a desired angle of bending (e.g., up to 90°, and preferably up to 180°), and more preferably, to allow the desired degree of bending such that the edges 50 of the grooves 200 are in contact at the desired degree of bend. This compensatory approach can ensure that the protective function of the grooves 200 persists even as the dimensions of the groove 200 are varied.

Returning to FIGS. 1-2, the system 100 may include a panel support 230. The panel support 230 may be operationally connected to, or formed as part of, the panel stationary portion 180. The panel support 230 may be utilized for securing the panel stationary portion 180 to a support structure of the motorized passenger carrier. For example, the panel support 230 may bolt to a floor of a bus or become secured to a floor track of the bus.

As shown in FIG. 1 the first living hinge 190 may define a first living hinge shape, which for simplicity is referred to as a first hinge shape. As shown in FIG. 1, the first hinge shape is rectangular, though this is not intended on limiting this scope of the disclosure. The first hinge shape may define a first longitudinal hinge end 240 extending transversely from a hinge forward end 260 to a hinge aft end 270. The first longitudinal hinge end 240 may define a first hinge joint 275 between the panel stationary portion 180 and the first living hinge 190.

The hinge forward and aft ends 260, 270 may extend longitudinally, toward the panel top end 140, from the first longitudinal hinge end 240 to a second longitudinal hinge end 280. As shown, the second longitudinal hinge end 280 may extend transversely between the hinge forward and aft ends 260, 270. The second longitudinal hinge end 280 may define a second hinge joint 290 between the flap 220 and the first living hinge 190.

The hinge grooves 200 (FIG. 3A) of the first living hinge 190 may extend transversely between the hinge forward and aft ends 260, 270. As indicated and shown in FIG. 3A, the hinge grooves 200 may be longitudinally spaced apart from each other between the first and second longitudinal hinge ends 240, 280 (FIG. 1).

As shown in FIG. 2, an aperture boundary 300, defining a window, may be formed in the panel stationary portion 180, between the panel top and bottom ends 140, 130, and between the panel forward and aft ends 160, 170. In one embodiment, the aperture boundary is saw cut into the panel. The aperture boundary 300 may define an aperture boundary shape, which for simplicity is referred to as an aperture shape. As shown in FIG. 2, the aperture shape is rectangular, though this is not intended on limiting this scope of the disclosure. Further, the flap 220 may a flap shape, which for simplicity is referred to as a flap shape. As shown in FIG. 2, the flap shape may be complementary to the aperture shape. From this configuration of the system 100, when the first living hinge 190 is in the unflexed state 225b (FIG. 1), the flap 220 is located within the aperture boundary 300 and flush, or co-planar with the panel stationary portion 180. This state may be referred to as a window-closed state. From this configuration of the system 100, when the first living hinge 190 is in the flexed state 225a (FIG. 3A), a front surface 220a (FIG. 1) of the flap 220 is located against a front surface 180a (FIG. 2) of the panel stationary portion 180, and the window defined by the aperture boundary 300 is exposed. This state may be referred to as a window-opened state. The window-closed state, for a bus application, may be utilized when passengers enter the bus. The window-opened state may be utilized for a direct line of sight to a bus door when passengers are onboard.

As shown in FIG. 2, the aperture shape may be defined by a first longitudinal aperture end 310 that is defined by the first hinge joint 275 (Fig. 3A) and extends transversely from an aperture forward end 320 to an aperture aft end 330. The aperture forward and aft ends 320, 330 may be formed in the panel stationary portion 180. The aperture forward and aft ends 320, 330 may extend longitudinally, toward the panel top end 140, from the first longitudinal aperture end 310 to a second longitudinal aperture end 340. The second longitudinal aperture end 340 may extend transversely between the aperture forward and aft ends 320, 330.

A fastener 350 may be operationally connected to or formed as part of the panel stationary portion 180. The fastener 350 may be located between the aperture boundary 300 and the panel top end 140. The fastener 350 may be configured to engage the flap 220 for securing the flap 220 within the aperture boundary 300 when the first living hinge 190 is in the unflexed state 225b as is illustrated in FIG. 1 and FIG. 2. That is, the fastener 350 enables the flap 220 to close the window defined by the aperture boundary 300, i.e., to place the system 100 in the window-closed state. It is within the scope of the disclosure to provide an additional fastener to the panel stationary portion 180 to secure the flap 220 in the window-opened state as well and as is illustrated in FIG. 4A.

The fastener 350 may enable releasable attachment (i.e., removable without damage to components). The releasable attachment can be accomplished with a connector, such as hasp assembly, a hook and loop connector (e.g., Velcro), magnets, an adhesive such as glue, tape, etc. In one embodiment another fastener 350a may be in the form of a releasable member that itself defines or is attached to a structure that defines a lip 350b extending about at least apart of the aperture boundary 300 or panel 220 that includes the hook and loop fastener, magnet or releasable glue that engages a complementary material or surface treatment on the other of the panel 220 and aperture boundary 300. This fastener 350a may secure the panel 220 in a window-closed state.

As shown in the embodiment of FIGS. 1-2 the aperture boundary 300 is formed between the first living hinge 190 and the panel top end 140. In this embodiment, the flap 220 is pivoted downwardly about the first living hinge 190 to open the window defined by the aperture boundary 300. The flap 220 is pivoted upwardly about the first living hinge 190 to close the window defined by the aperture boundary 300.

As shown in the embodiment of FIG. 4A, which is substantially the same as the embodiment of FIGS. 1-2, the aperture boundary 300 may be formed between the first living hinge 190 and the panel bottom end 130. That is, the first hinge joint 275, connecting the first living hinge 190 to the flap 220, is closer to the panel bottom end 130 than the second hinge joint 290, connecting the first living hinge 190 to the panel stationary portion 180. On the other hand, the second hinge joint 290 is closer to the panel top end 140 than the first hinge joint 275. The relative sizing and placement of the aperture boundary 300 between forward and aft ends 160, 170 of the panel 110, may be the same as with FIGS. 1-2. In this embodiment, the flap 220 is pivoted upwardly about the first living hinge 190 to place the system 100 in the window-opened state. The flap 220 is pivoted downwardly about the first living hinge 190 to place the system 100 in the window-closed state. A flap mounted fastener 350d may be included, which may connected with the fastener 350 to hold the flap 220 in the window-opened state.

With the above embodiments, except for the hinge grooves 200, the panel 110 may have a constant thickness. In addition, the panel 110 may be formed from polycarbonate. Moreover, the panel 110 may be transparent.

With the configuration of FIGS. 1-2, the forward panel end 160 is formed by a longitudinally extending edge. The top and bottom panel ends 140, 130 are formed by respectively transversely extending edges that extend transversely aft from the forward panel end 160. As shown, the top end 140 is longer than the bottom end 130. The aft panel end 170 is formed by an arcuate edge connecting the top and bottom ends 140, 130. In the configuration of FIG. 4A, the ends 130, 140, 160, 170 of the panel 110 form a rectangle that is longer in the longitudinal direction. Neither of these configurations is intended on limiting the scope of the disclosed embodiments. That is, the panel 110, made from polycarbonate, may be shaped as desired for the circumstances.

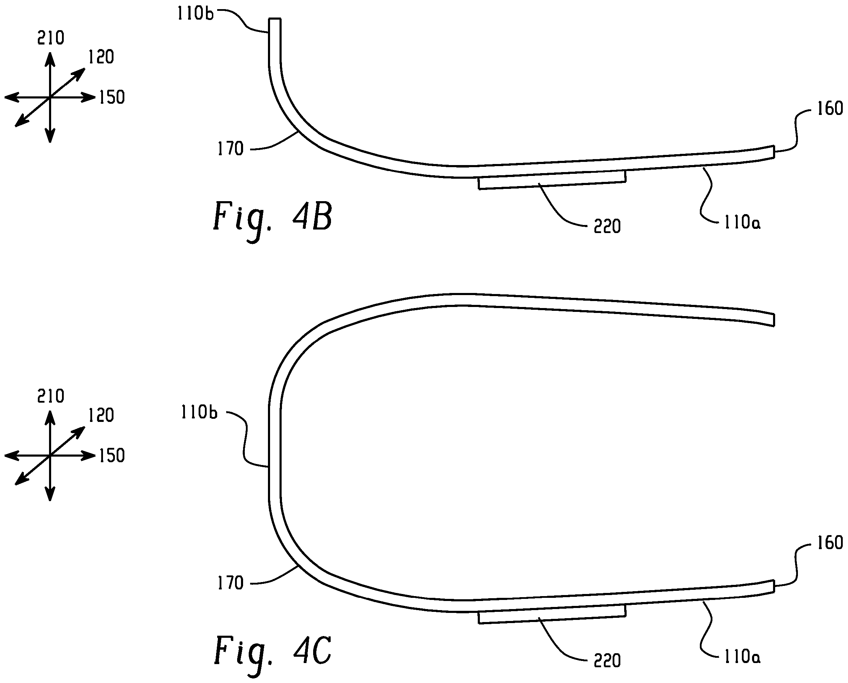

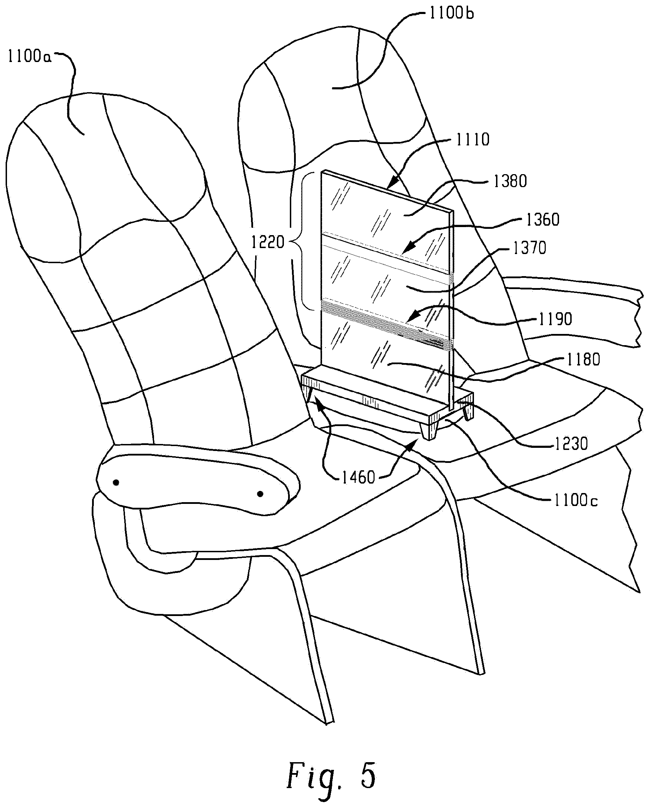

For example, to provide for protection of an occupant such as a bus driver, the panel 110 may be planar as shown. Alternatively, as shown in FIG. 4B, the aft end 170 of the panel 110 may be curved to extend in the depth direction to form an L shape. That is, the panel defines a body portion 110a transversely between the panel forward and aft ends 160, 170, and the panel aft end 170 defines a partial return 110b, extending in the depth direction 210 away from the body portion 110a. Alternatively, as shown in FIG. 4C, the return 110b defined by the aft end 170 of the panel 110 may be curved to extend away from the body portion 110a in the depth direction and in the transverse direction to form an a U shape, or complete return. FIGS. 4B and 4C illustrate the flap 220 in the window-opened state for context, where the flap 220 is strategically located between the panel forward and aft ends 160, 170 for an unhindered view, e.g., to the right of a bus driver. As can be appreciated, FIGS. 4B and 4C form partial and complete enclosures, e.g., for a driver of a bus. Other shapes for enclosures are within the scope of the disclosure. The shape and resulting protection may be related to security and/or related to biological concerns, such as preventing the spread of contact and/or airborne contagions, including viral and bacterial contagions. Turning to FIGS. 5-8, an alternate embodiment of the system 1100 is shown. In this embodiment, system 1100 may be formed as divider between adjacent passenger seats 1100a, 1100b (FIG. 5) in the vehicle rather than being positioned about a driver seat of the vehicle, for example, a plane, a train, or a bus. The system is supported by an armrest 1100c between the passenger seats 1100a, 1100b.

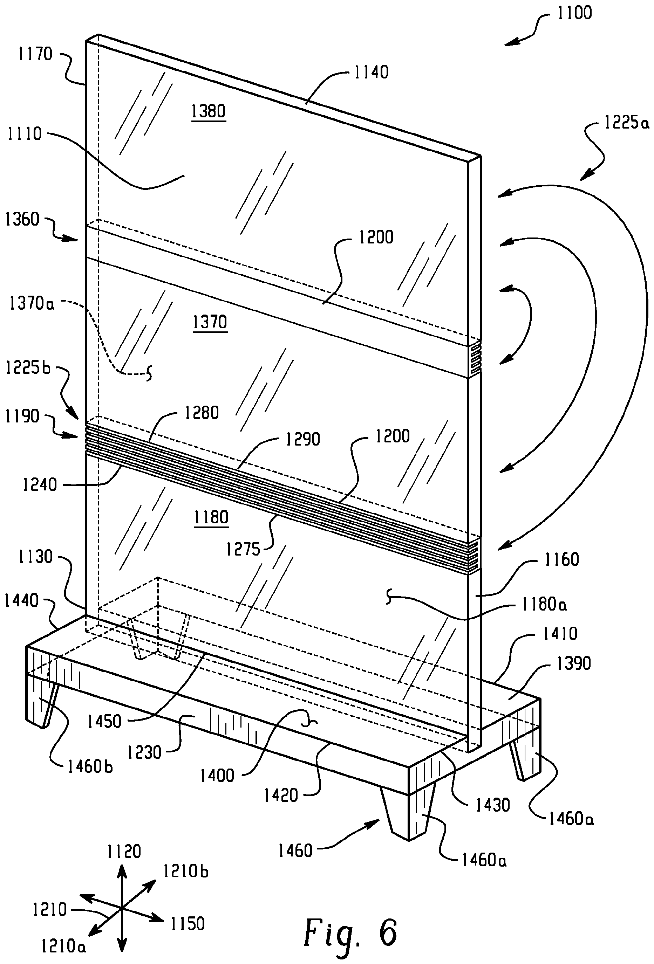

The system 1100 of FIGS. 6-8 includes a panel 1110. The panel 1110 may extend in a longitudinal direction 1120 from a panel bottom end 1130 to a panel top end 1140. The panel 1110 may extend in a transverse direction 1150 from a panel forward end 1160 to a panel aft end 1170. As shown, the longitudinal and transverse directions 1120, 1150 are substantially perpendicular to each other. The panel 1110 may define a panel stationary portion 1180. The panel 1110 may define a first living hinge 1190 operationally connected to the panel stationary portion 1180. The first living hinge 1190 may be longitudinally located in the panel 1110 between the panel top and bottom ends 1140, 1130.

The panel 1110 may define a flap 1220 (Fig. 5). The flap 1220 may be operationally connected to the first living hinge 1190.

The first living hinge 1190 may include hinge grooves 1200, shown schematically in FIG. 6. The hinge grooves 1200 may be inset in a depth direction 1210 into the first living hinge 1190. The hinge grooves 1200 may extend in the transverse direction 1150. The hinge grooves 1200 may be spaced apart from each other in the longitudinal direction 1120.

The first living hinge 1190 may be configured for being in a flexed state 1225a, shown schematically with motion arrows in FIG. 6. In the flexed state 1225a, the flap 1220 may be pivoted against the panel stationary portion 1180. The first living hinge 1190 may also be configured for being in an unflexed state 1225b, which is the configuration shown in FIGS. 5-6. In the unflexed state, the flap 1220 may be oriented so that it is planar with the panel stationary portion 1180. The second living hinge 1360 can be configured to allow the inner flap to flex in the same flex direction as the first living hinge 1190, for example, such that the grooves 1200 face inwardly 1210b allowing the respective flaps to flex in a clockwise direction. Conversely, the second living hinge 1360 can be configured to allow the inner flap to flex in a different flex direction as the first living hinge 1190, for example, such that the grooves 1200 of the first living hinge 1190 face inwardly 1210b allowing the outer flap 1380 to flex in a clockwise direction and the grooves 1200 of the second living hinge 1360 face outwardly 1210a allowing the inner flap 1370 to flex in a counter clockwise direction. In this second scenario, the system 1100 would form an s-shape when both living hinges are flexed.

The system 1100 may include a panel support 1230. The panel support 1230 may be operationally connected to, or formed as part of, the panel stationary portion 1180. The panel support 1230 may be utilized for securing the panel stationary portion 1180 to a support structure of the motorized passenger carrier, which in the embodiment of FIGS. 5-6 is the armrest 1100c.

As shown in FIG. 6 the first living hinge 1190 may define a first living hinge shape, which for simplicity is referred to as a first hinge shape. As shown in FIG. 6, the first hinge shape is rectangular, though this is not intended on limiting this scope of the disclosure. The first hinge shape may define a first longitudinal hinge end 1240 extending transversely from the panel forward end 1160 to the panel aft end 1170. The first longitudinal hinge end 1240 may define a first hinge joint 1275 between the panel stationary portion 1180 and the first living hinge 1190. A second longitudinal hinge end 1280 may be longitudinally spaced apart from the first longitudinal hinge end 1240, with the grooves 1200 longitudinally therebetween. The second longitudinal hinge end 1280 may extend transversely from the panel forward end 1160 to the panel aft end 1170. The second longitudinal hinge end 1280 may define a second hinge joint 1290 between the flap 1220 and the first living hinge 1190.

Similarly to the configuration of the first living hinge 190 in the embodiment in FIGS. 1-3, the hinge grooves 1200 in the first living hinge 1190 of the embodiment of FIGS. 5-6 may be longitudinally spaced apart from each other between the first and second longitudinal hinge ends 1240, 1280. In the embodiment in FIGS. 5-6, the hinge grooves 1200 may extend between the panel forward and aft ends 1160, 1170. In this configuration, the first living hinge 1190 may transversely divide the panel between the flap 1220 and the panel stationary portion 1180. In other respects, the first living hinge 1190 of the embodiments in FIGS. 5-6 is the same as the first living hinge 190 shown in FIG. 3. A second living hinge 1360 may be formed in the flap 1220. The second living hinge 1360 may be located longitudinally between the first living hinge 1190 and the panel top end 1140. The second living hinge 1360 may extend between the panel forward and aft ends 1160, 1170. The first and second living hinges 1190, 1360, may be configured the same as each other. This configuration may longitudinally separate the flap 1220 into an inner flap 1370 (or inner flap portion) and an outer flap 1380 (or outer flap portion). The inner flap 1370 may longitudinally extend between the first and second living hinges 1190, 1360. The outer flap 1380 may longitudinally extend between the first living hinge 1190 and the panel top end 1140. In one embodiment, a longitudinal span, or height, of the panel stationary portion 1180, the inner flap 1370 and the outer flap 1380 are the same as each other.

With this embodiment, except for the hinge grooves 1200, the panel 1110 may have a constant thickness. In addition, the panel 1110 may be formed from polycarbonate. Moreover, the panel 1110 may be transparent.

Thus in this embodiment, the outer flap 1380 may pivot downwardly, against the inner flap 1370, resulting in a partial folded state for the system 1100 to provide a first level of separation between the first and second passenger seats 1100a, 1100b. The inner flap 1370 may then pivot downwardly, against the panel stationary portion 1180, resulting in a fully folded state for the system 1100 to provide a second (lesser) level of separation between the first and second passenger seats 1100a, 1100b. The first and second living hinges 1190, 1360 may face opposing directions relative to the depth direction 1210. For example, grooves 1200 may face outwardly 1210a in the depth direction 1210 for the first living hinge 1190. The grooves 1200 may face inwardly 1210b in the depth direction 1210 for the second living hinge 1360. This may enable the outer flap 1380 to pivot against a rear surface 1370a of the inner flap 1370, while the inner flap 1370 pivots against a front surface 1180a of the panel stationary portion 1180. This may provide a more compact system 1100 that can be secured in a fully folded state with a latch. The panel 1100 may be placed in a partial or fully folded state depending on the circumstances. For example, the separation may be related to preventing the spread of contact and/or airborne contagions, including viruses and bacterial contagions.

As shown in FIGS. 5-6, the panel support 1230 may be fixed to the panel stationary portion 1180. In this configuration, the panel support 1230 may secure the panel stationary portion 1180 in an upright orientation between the seats 1100a, 1100b, above the armrest 1100c. The panel support 1230 may define a platform portion 1390 having a planar top surface 1400. The planar top surface 1400 may extend in the depth direction 1210 between a panel support inner end 1410 and a panel support outer end 1420. The top planar surface 1400 also may extend in the transverse direction 1150 between a panel support forward end 1430 and a panel support aft end 1440.

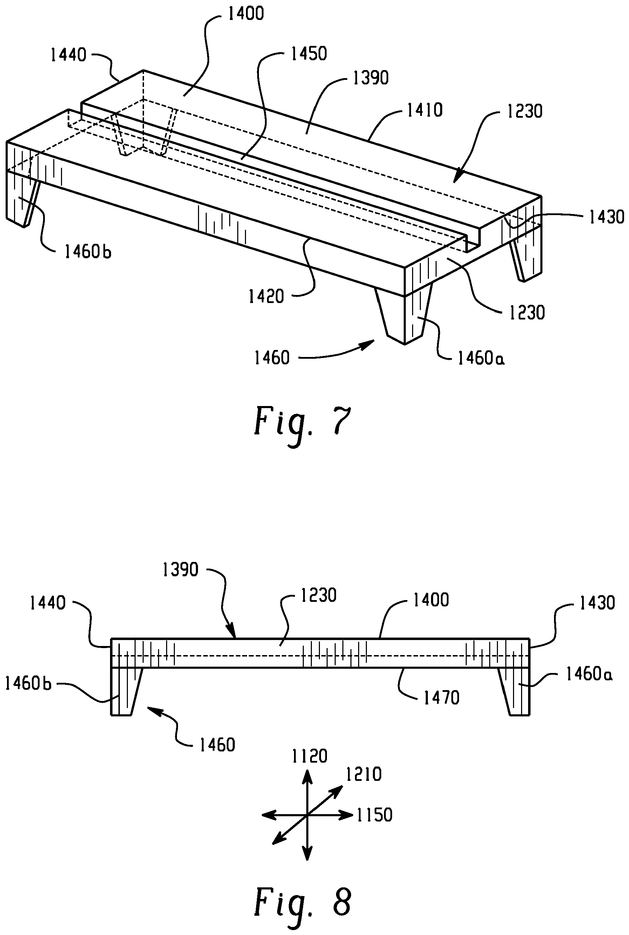

As shown in FIG. 7, a panel support groove 1450 may be formed in the planar top surface 1400. The panel support grooves 1450 may be saw cut into the panel support 1230. The panel support groove 1450 may be recessed into the planar top surface 1400 in the longitudinal direction 1120. The panel support groove 1450 may extend in the planar top surface 1400 between the panel support forward and aft ends 1430, 1440. The panel bottom end 1130 (Fig. 6) may be seated in the panel support groove 1450 to secure it to the panel support 1230.

As shown in FIGS. 5-8, the panel support 1230 may include support legs 1460. The support legs 1460 may define a forward pair or set of support legs 1460a and an aft pair or set of support legs 1460b. The support legs 1460 may connect to a longitudinal underside 1470 of the platform portion 1390. The support legs 1460 may extend longitudinally away (e.g., downwardly) from the platform portion 1390, in a longitudinal position direction relative to the panel 1110. The support legs 1460 may be positioned such that the panel support 1230 is configured for bracing against the support structure of the motorized passenger carrier. Thus, for example, within each pair of support legs 1460a, 1460b, the support legs 1460 may be spaced apart from each other in the depth direction 1210 by a distance that allows a friction, snug, or wobble-free fit about the armrest 1100c.

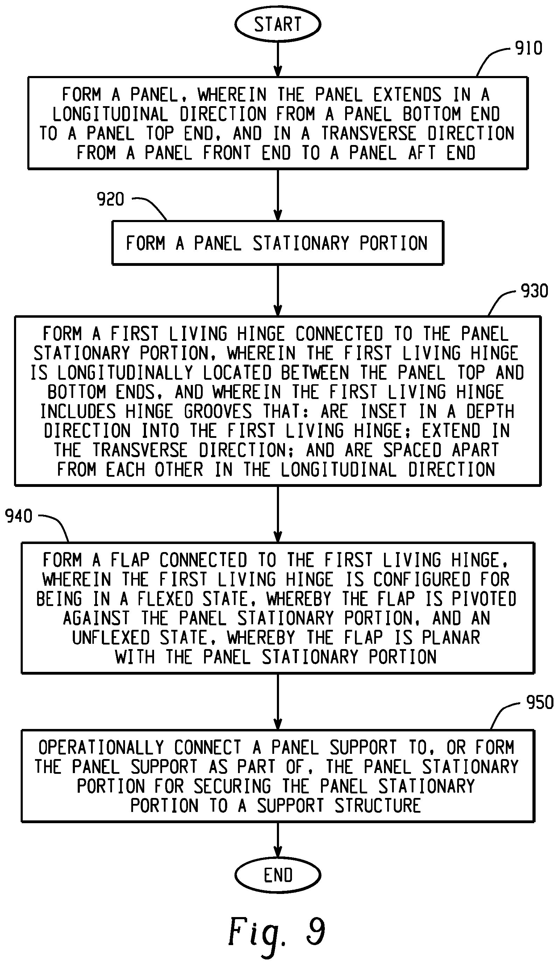

Turning to FIG. 9, a flowchart shows a method of forming a system 100, 1100 that defines a personal barrier for separating people, e.g., in a motorized passenger carrier. As shown in block 910, the method includes forming a panel 110, 1110 such that the panel extends in a longitudinal direction 120, 1120 from a panel bottom end 130, 1130 to a panel top end 140, 1140, and in a transverse direction 150, 1150 from a panel forward end 160, 1160 to a panel aft end 170, 1170. As shown in block 910, forming the panel 110, 1110 includes forming a panel stationary portion 180, 1180. As shown in block 930, the method includes forming a first living hinge 190, 1190 connected to the panel stationary portion 180, 1180 so that the first living hinge 190, 1190 is longitudinally located between the panel top and bottom ends 140, 1140, and 130, 1130. In addition, the first living hinge 190, 1190 is formed so that it includes hinge grooves 200, 1200. The hinge grooves 200, 1200 are configured so that they are inset in a depth direction 210, 1210 into the first living hinge 190, 1190. In addition, the hinge grooves 200, 1200 are configured so that they extend in the transverse direction 150, 1150 and are spaced apart from each other in the longitudinal direction 120, 1120.

As shown in block 940, the method includes forming a flap 220, 1220, connected to the first living hinge 190, 1190. The first living hinge 190, 1190 is configured for being in a flexed state 225a, 1225a. In the flexed state for the first living hinge 190, 1190, the flap 220, 1220 is pivoted against the panel stationary portion 180, 1180. In an unflexed state 225b, 1225b for the first living hinge 190, 1190, the flap 220, 1220 is planar with the panel stationary portion 180, 1180.

As shown in block 950, the method includes operationally connecting a panel support 230, 1230 to, or forming the panel support 230, 1230 as part of, the panel stationary portion 180, 1180. This configuration enables securing the panel stationary portion 180, 1180 to a support structure of the motorized passenger carrier.

Thus, described herein are various embodiments of systems and methods relating to a panel, which may be a transparent protective panel, that may form an enclosure with living hinge(s), and more particularly to an enclosure and panel system that may be installed in buses, trains, aircraft, taxis, bank teller stations, ticket counters, grocery store check-outs, and reception desk areas. The panel, with built-in flaps, described and disclosed herein can be adapted to accommodate geometric irregularities in existing these locations. With a flap configuration (FIGS. 1-3) window-open and window-closed configurations can be utilized as necessary to both protect a service person and enable the conduction business through a window defined by an aperture boundary, as required. A user can trim or cut one or more parts of the panel and achieve a tight custom fit of the flap within the panel. A user may further drape form the panel for a custom fit in various spaces.

The material selected for the panel may be determined by the applicable regulations in a given vehicle and country. Plastic materials meeting FMVSS 205 (Federal Motor Vehicle Safety Standards) may be applicable in the United States. Other plastics may be required to meet EN45455 (a European railway standard for fire safety) rail norms, in Europe, for instance. Various other functionalities built into the system as required that may include anti-microbial, weather resistance, fracture resistance, low optical distortion, fire resistance, and etcetera. For example, the panel may be subject to a post-coat to increase scratch resistance of the substrate that may include an anti-microbial agent. Weather resistance agents may be applied in the coated or uncoated panel that may include an anti-microbial agent. The panel may have a high fracture resistance dependent on plastic chosen. The panel may have a low optical distortion.

The panel can have a haze value of less than or equal to 5% according to ASTM D1003-13, Procedure A, using D65 illumination, 10 degrees observer, and at the thickness of the panel, preferably less than or equal to 2%. The panel can have a visible light transmission value of greater than or equal to 50%, for example, greater than or equal to 70%, for example, 70%, for example, greater than or equal to 80%, for example, greater than or equal to 85%, for example, greater than or equal to 90%, as determined in accordance with ASTM D1003-00, Procedure A, using D65 illumination, 10 degrees observer, and at a thickness of 3 millimeters. A thickness of the panel can be, for example, 0.5 millimeters to 5 millimeters, for example, 0.5 millimeters to 3 millimeters, for example, 0.5 to 2 millimeters.

The panel can comprise a single layer, e.g., a monolithic sheet. Optionally, the panel can comprise a plurality of layers. For example, the thermoplastic polymer can comprise a plurality of layers greater than or equal to 4 layers, for instance, greater than or equal to 32 layers, greater than or equal to 64 layers. The total number of layers can be 8 to 512 layers, or 32 to 128 layers. The plurality of layers of the thermoplastic polymer can include less than or equal to 512 layers, or less than or equal to 256 layers, for example, less than or equal to 128 layers.

The panel comprises a polymeric composition. The respective components of the polymeric composition are not particularly limited, but should be selected such that the panel, and more particularly, the living hinge exhibit the desired features. For example, the polymeric composition can be selected such that it is ductile enough to open and close the flap multiple times without a failure event, such as a fracture in the living hinge. Depending on the use, the polymeric composition can be selected such that it is ductile enough to open and close the flap can more than 5,000 times, or more than 50,000 times at a temperature of 23°C and a relative humidity of 50% without a failure event. An exemplary polymer for use in the polymeric composition is polycarbonate.

Polycarbonate as used herein means a homopolymer or copolymer having repeating structural carbonate units of formula (1) 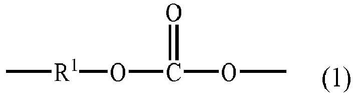 wherein at least 60 percent of the total number of R¹ groups are aromatic, or each R¹ contains at least one C₆₋₃₀ aromatic group. Each R¹ can be derived from a dihydroxy compound such as an aromatic dihydroxy compound of formula (2) or a bisphenol of formula (3). 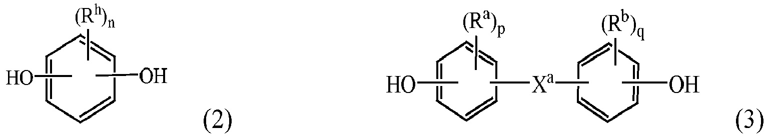 In formula (2), each R^{h} is independently a halogen atom, a C₁₋₁₀ hydrocarbyl group that is optionally halogen-substituted such as a C₁₋₁₀ alkyl or a C₆₋₁₀ aryl, and n is 0 to 4. In formula (3), R^{a} and R^{b} are each independently a halogen, C₁₋₁₂ alkoxy, or C₁₋₁₂ alkyl, and p and q are each independently integers of 0 to 4, such that when p or q is less than 4, the valence of each carbon of the ring is filled by hydrogen. X^{a} is a bridging group connecting the two hydroxy-substituted aromatic groups. The carbonate repeat unit can comprise repeat units derived from bisphenol A.

The polymeric composition can comprise a poly(ester-carbonate) comprising both ester and carbonate repeat units. The polyester can have repeating units of the following general formula (4). 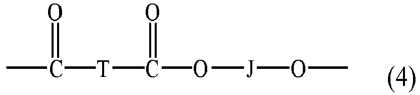 In formula (4), J is a divalent group derived from a dihydroxy compound (which includes a reactive derivative thereof), and can be, for example, a C₁₋₁₀ alkylene, a C₆₋₂₀ cycloalkylene, a C₅₋₂₀ arylene, or a polyoxyalkylene group in which the alkylene groups contain 2 to 6 carbon atoms, or, 2, 3, or 4 carbon atoms; and T is a divalent group derived from a dicarboxylic acid (which includes a reactive derivative thereof), and can be, for example, a C₁₋₂₀ alkylene, a C₅₋₂₀ cycloalkylene, or a C₆₋₂₀ arylene. Copolyesters containing a combination of different T or J groups can be used.

The polymeric composition can comprise a poly(carbonate-siloxane) comprising both carbonate and siloxane repeat units. The polydiorganosiloxane (also referred to herein as "polysiloxane") comprise repeating diorganosiloxane units as in formula (10). 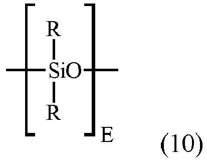 In formula (10) each R is independently a C₁₋₁₃ monovalent organic group that can be fully or partially halogenated. The value of E in formula (10) can vary widely depending on the desired properties of the composition. Generally, E has an average value of 2 to 1,000, or 2 to 500. The siloxane repeat units can be derived from a poly(alkyl siloxane) such as poly(dimethyl siloxane).

The polymeric material can comprise a polycarbonate under the trade name LEXAN^{™} from SABIC's Innovative Plastics Business, for example, a polycarbonate such as LEXAN^{™} 101 or a poly(carbonate-siloxane) such as LEXAN^{™} EXL.

The polymeric composition can comprise an additive with the proviso that the additive(s) are also selected so as to not significantly adversely affect the operability of the living hinge. The additive can include at least one of an impact modifier, flow modifier, filler (e.g., a particulate polytetrafluoroethylene (PTFE), glass, carbon, mineral, or metal), reinforcing agent (e.g., glass fibers), antioxidant, heat stabilizer, light stabilizer, ultraviolet (UV) light stabilizer, UV absorbing additive, plasticizer, lubricant, release agent (e.g., a mold release agent), antistatic agent, anti-fog agent, antimicrobial agent, colorant (e.g., a dye or pigment), surface effect additive, radiation stabilizer, flame retardant, or an anti-drip agent (e.g., a PTFE-encapsulated styrene-acrylonitrile copolymer (TSAN)). The respective additives can be present in amounts of 0.001 to 10.0 weight percent, or 0.01 to 5 weight percent, each based on the total weight of the polymer in the composition.

The panel can include one or more additional layers. The additional layer can include at least one of a decorative layer (for example, a mirrored surface, a decorative image, or a tinted material) or a protective layer (for example, an abrasion resistant layer or weathering layer that can protect the panel from ultraviolet light). The additional layer can partially or fully cover a surface of the panel. The additional layer can be co-extruded, coated (for example, dip coated, spray coated, curtain coated, sputter coated, or plasma coated), or laminated onto the panel before or after forming the living hinge as applicable. For example, a more brittle layer (such as a silicone hard coat) can be provided on a surface of the panel before forming the living hinge provided the brittle layer is not formed in the area where the living hinge or is removed prior to forming the living hinge. Conversely, the more brittle layer can be added after the living hinge is formed. As used herein, the term "more brittle layer" refers to a layer that will crack or fracture or will ultimately not survive a routing process to form the living hinge.

Generally, the abrasion resistant layer can comprise at least one of an organic coating and/or an inorganic coating such as, but not limited to, aluminum oxide, barium fluoride, boron nitride, hafnium oxide, lanthanum fluoride, magnesium fluoride, magnesium oxide, scandium oxide, silicon monoxide, silicon dioxide, silicon nitride, silicon oxy-nitride, silicon carbide, silicon oxy carbide, hydrogenated silicon oxy-carbide, tantalum oxide, titanium oxide, tin oxide, indium tin oxide, yttrium oxide, zinc oxide, zinc selenide, zinc sulfide, zirconium oxide, zirconium titanate, or glass. The weathering layer can comprise at least one of a silicone, a polyurethane, an acrylic, a polyacrylate, a polyester, or an epoxy. The weathering layer can include ultraviolet absorbing. The weathering layer can comprise a silicone hard coat layer (AS4000 or AS4700, commercially available from Momentive Performance Materials). The weathering layer can comprise a primer layer and a coating (e.g., a top coat).

The system defining the personal barrier with a flap connected by a living hinge, and a method of forming the same, disclosed herein include(s) at least the following aspects:
Aspect 1: A system 100, 1100 that defines a personal barrier, comprising: a panel 110, 1100, wherein the panel 110, 1100 extends in a longitudinal direction 120, 1120 from a panel bottom end 130, 1130 to a panel top end 140, 1140, and in a transverse direction 150, 1150 from a panel forward end 160, 1160 to a panel aft end 170, 1170,wherein the panel defines: a panel stationary portion 180, 1180; a first living hinge 190, 1190 operationally connected to the panel stationary portion 180, 1180, wherein the first living hinge 190, 1190 is longitudinally located between the panel top and bottom ends, and wherein the first living hinge 190, 1190 includes hinge grooves 200, 1200 that: are inset in a depth direction 210, 1210 into the first living hinge 190, 1190; extend in the transverse direction 150, 1150; and are spaced apart from each other in the longitudinal direction 120, 1120; and a flap 220, 1220 operationally connected to the first living hinge 190, 1190, wherein the first living hinge 190, 1190 is configured for being in a flexed state 225a, 1225a, whereby the flap 220, 1220 is pivoted against the panel stationary portion 180, 1180, and an unflexed state 225b, 1225b, whereby the flap 220, 1220 is planar with the panel stationary portion 180, 1180; and a panel support 230, 1230 operationally connected to, or formed as part of, the panel stationary portion 180, 1180 for securing the panel stationary portion 180, 1180 to a support structure.
Aspect 2: The system of Aspect 1, wherein the first living hinge 190 has a first hinge shape defined by: a first longitudinal hinge end 240 that extends from a hinge forward end 260 to a hinge aft end 270, wherein the first longitudinal living hinge end defines a first hinge joint 275 between the panel stationary portion 180 and the first living hinge 190; wherein the hinge forward and aft ends extend longitudinally from the first longitudinal hinge end 240 to a second longitudinal hinge end 280 that extends transversely therebetween, wherein the second longitudinal hinge end 280 may define a second hinge joint 290 between the flap 220 and the first living hinge 190, and wherein the hinge grooves 200 of the first living hinge 190extend transversely between the hinge forward and aft ends and are longitudinally spaced apart from each other between the first and second longitudinal hinge ends.
Aspect 3: The system of Aspect 2, wherein: an aperture boundary 300 is formed in the panel stationary portion 180 between the panel top and bottom ends and between the panel forward and aft ends, the aperture boundary 300 defines an aperture shape, wherein the flap 220 has a flap shape that is complementary to the aperture shape, whereby when the first living hinge 190 is in the unflexed state 225b, the flap 220, is located within the aperture boundary 300 and flush with the panel stationary portion 180.
Aspect 4: The system of Aspect 3, wherein the aperture shape is defined by: a first longitudinal aperture end 310 that is defined by the first hinge joint 275 and extends from an aperture forward end 320 to an aperture aft end 330; wherein the aperture forward and aft ends are formed in the panel stationary portion 180, 1180 and extend longitudinally from the first longitudinal aperture end 310 to a second longitudinal aperture end 340, and wherein the second longitudinal aperture end 340 is formed in the panel stationary portion 180, 1180 and extends transversely from the aperture forward end 320 to the aperture aft end 330.
Aspect 5: The system of any one of Aspects 3-4, wherein: a fastener 350, operationally connected to the panel stationary portion 180 between the aperture boundary 300 and the panel top end 140, is configured to engage the flap 220, thereby securing the flap 220, within the aperture boundary 300 when the first living hinge 190 is in the flexed state 225a.
Aspect 6: The system of any one of Aspects 4-5, wherein: the aperture boundary 300 is formed between the first living hinge 190 and the panel top end 140; or the aperture boundary 300 is formed between the first living hinge 190 and the panel bottom end 130.
Aspect 7: The system of any one of Aspects 2-5, wherein: the panel 110, transversely between the panel forward and aft ends 160, 170, defines a panel body portion 110a, and the panel aft end 170 defines a partial or full return portion 110b that extends at least partially in the depth direction 210 away from the panel body portion 110a, to thereby form at least a partial enclosure. Aspect 8: The system of Aspect 1, wherein: the hinge grooves 1200 extend between the panel forward and aft ends, thereby transversely dividing the panel between the flap 1220 and the panel stationary portion 1180.
Aspect 9: The system of Aspect 8, wherein: a second living hinge 1360 is formed in the flap 1220, located longitudinally between the first living hinge 1190 and the panel top end 1140, and extending between the panel forward and aft ends, thereby longitudinally separating the flap 1220 into an inner flap 1370 that longitudinally extends between the first and second living hinges, and an outer flap 1380 that longitudinally extends between the first living hinge 1190 and the panel top end 1140, wherein the first and second living hinges are configured in opposing directions.
Aspect 10: The system of any one of Aspects 8-9, wherein: the panel support 1230 is fixed to the panel stationary portion 1180 for securing the panel stationary portion 1180 in an upright orientation against the support structure; the panel support 1230 defines a platform portion 1390 having a planar top surface 1400 extending: in the depth direction 1210 between a panel support inner end 1410 and a panel support outer end 1420; and in the transverse direction 1150 between a panel support forward end 1430 and a panel support aft end 1440; and a panel support groove 1450 is formed in the planar top surface 1400, wherein the panel support groove 1450 is recessed into the planar top surface 1400 in the longitudinal direction 1120 and extends in the planar top surface 1400 between the panel support forward and aft ends, and wherein the panel bottom end 1130 is seated in the panel support groove 1450 and thereby secured to the panel support 1230.
Aspect 11: The system of Aspect 10, wherein: the panel support 1230 includes support legs 1460, defining forward support legs 1460a and aft support legs 1460b, connected to a longitudinal underside 1470 of the platform portion 1390 and extend longitudinally away from the platform portion 1390, wherein the support legs 1460 are positioned such that the panel support 1230 is configured for bracing against the support structure.
Aspect 12: The system of any one of the preceding Aspects, wherein: except for the hinge grooves 200, 1200, the panel 110, 1110 has a constant thickness.
Aspect 13: The system of any one of the preceding Aspects, wherein: the panel 110, 1110 comprises a polycarbonate.
Aspect 14: A method of forming a system 100, 1100 that defines a personal barrier, the method comprising: forming a panel 110, 1100, wherein the panel extends in a longitudinal direction 120, 1120 from a panel bottom end 130, 1130 to a panel top end 140, 1140, and in a transverse direction 150, 1150 from a panel forward end 160, 1160 to a panel aft end 170, 1170; wherein forming the panel includes: forming a panel stationary portion 180, 1180; forming a first living hinge 190, 1190 connected to the panel stationary portion 180, 1180, wherein the first living hinge 190, 1190 is longitudinally located between the panel top and bottom ends, and wherein the first living hinge 190, 1190 includes hinge grooves 200, 1200 that: are inset in a depth direction 210, 1210 into the first living hinge 190, 1190; extend in the transverse direction 150, 1150; and are spaced apart from each other in the longitudinal direction 120, 1120; and forming a flap 220, 1220 connected to the first living hinge 190, 1190, wherein the first living hinge 190, 1190 is configured for being in a flexed state 225a, 1225a, whereby the flap 220, 1220 is pivoted against the panel stationary portion 180, 1180, and an unflexed state 225b, 1225b, whereby the flap 220, 1220 is planar with the panel stationary portion 180, 1180; and operationally connecting a panel support 230, 1230 to, or forming the panel support 230, 1230 as part of, the panel stationary portion 180, 1180 for securing the panel stationary portion 180, 1180 to a support structure.
Aspect 15: The method of Aspect 14, wherein: except for the hinge grooves 200, 1200, the panel has a constant thickness; and the panel comprises a polycarbonate.

In general, the invention may alternately comprise, consist of, or consist essentially of, any appropriate components herein disclosed. The invention may additionally, or alternatively, be formulated so as to be devoid, or substantially free, of any components, materials, ingredients, adjuvants or species used in the prior art compositions or that are otherwise not necessary to the achievement of the function and/or objectives of the present invention. The endpoints of all ranges directed to the same component or property are inclusive and independently combinable (e.g., ranges of "less than or equal to 25 wt%, or 5 wt% to 20 wt%," is inclusive of the endpoints and all intermediate values of the ranges of "5 wt% to 25 wt%," etc.). Disclosure of a narrower range or more specific group in addition to a broader range is not a disclaimer of the broader range or larger group. "Combination" is inclusive of blends, mixtures, alloys, reaction products, and the like. Furthermore, the terms "first," "second," and the like, herein do not denote any order, quantity, or importance, but rather are used to denote one element from another. The terms "a" and "an" and "the" herein do not denote a limitation of quantity, and are to be construed to cover both the singular and the plural, unless otherwise indicated herein or clearly contradicted by context. "Or" means "and/or." The suffix "(s)" as used herein is intended to include both the singular and the plural of the term that it modifies, thereby including one or more of that term (e.g., the film(s) includes one or more films). Reference throughout the specification to "one embodiment", "another embodiment", "an embodiment", and so forth, means that a particular element (e.g., feature, structure, and/or characteristic) described in connection with the embodiment is included in at least one embodiment described herein, and may or may not be present in other embodiments. In addition, it is to be understood that the described elements may be combined in any suitable manner in the various embodiments.

The modifier "about" used in connection with a quantity is inclusive of the stated value and has the meaning dictated by the context (e.g., includes the degree of error associated with measurement of the particular quantity). The notation "+ 10%" means that the indicated measurement can be from an amount that is minus 10% to an amount that is plus 10% of the stated value. The terms "front", "back", "bottom", and/or "top" are used herein, unless otherwise noted, merely for convenience of description, and are not limited to any one position or spatial orientation. "Optional" or "optionally" means that the subsequently described event or circumstance can or cannot occur, and that the description includes instances where the event occurs and instances where it does not. Unless defined otherwise, technical and scientific terms used herein have the same meaning as is commonly understood by one of skill in the art to which this invention belongs. A "combination" is inclusive of blends, mixtures, alloys, reaction products, and the like.

All cited patents, patent applications, and other references are incorporated herein by reference in their entirety. However, if a term in the present application contradicts or conflicts with a term in the incorporated reference, the term from the present application takes precedence over the conflicting term from the incorporated reference.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. A system 100, 1100 that defines a personal barrier, the system comprising:
a panel 110, 1100,
wherein the panel 110, 1100 extends in a longitudinal direction 120, 1120 from a panel bottom end 130, 1130 to a panel top end 140, 1140, and in a transverse direction 150, 1150 from a panel forward end 160, 1160 to a panel aft end 170, 1170,
wherein the panel 110, 1110 defines:
a panel stationary portion 180, 1180;
a first living hinge 190, 1190 operationally connected to the panel stationary portion 180, 1180,
wherein the first living hinge 190, 1190 is longitudinally located between the panel top and bottom ends, and
wherein the first living hinge 190, 1190 includes hinge grooves 200, 1200 that: are inset in a depth direction 210, 1210 into the first living hinge 190, 1190; extend in the transverse direction 150, 1150; and are spaced apart from each other in the longitudinal direction 120, 1120; and
a flap 220, 1220 operationally connected to the first living hinge 190, 1190,
wherein the first living hinge 190, 1190 is configured for being in a flexed state 225a, 1225a, whereby the flap 220, 1220 is pivoted against the panel stationary portion 180, 1180, and an unflexed state 225b, 1225b, whereby the flap 220, 1220 is planar with the panel stationary portion 180, 1180; and
a panel support 230, 1230 operationally connected to, or formed as part of, the panel stationary portion 180, 1180 for securing the panel stationary portion 180, 1180 to a support structure.

2. The system of claim 1, wherein
the first living hinge 190 has a first hinge shape defined by:
a first longitudinal hinge end 240 that extends from a hinge forward end 260 to a hinge aft end 270, wherein the first longitudinal living hinge end defines a first hinge joint 275 between the panel stationary portion 180 and the first living hinge 190;
wherein the hinge forward and aft ends extend longitudinally from the first longitudinal hinge end 240 to a second longitudinal hinge end 280 that extends transversely therebetween,
wherein the second longitudinal hinge end 280 may define a second hinge joint 290 between the flap 220 and the first living hinge 190, and
wherein the hinge grooves 200 of the first living hinge 190 extend transversely between the hinge forward and aft ends and are longitudinally spaced apart from each other between the first and second longitudinal hinge ends.

3. The system of claim 2, wherein:
an aperture boundary 300 is formed in the panel stationary portion 180 between the panel top and bottom ends and between the panel forward and aft ends,
the aperture boundary 300 defines an aperture shape,
wherein the flap 220 has a flap shape that is complementary to the aperture shape,
whereby when the first living hinge 190 is in the unflexed state 225b, the flap 220 is located within the aperture boundary 300 and flush with the panel stationary portion 180.

4. The system of claim 3, wherein
the aperture shape is defined by:
a first longitudinal aperture end 310 that is defined by the first hinge joint 275 and extends from an aperture forward end 320 to an aperture aft end 330;
wherein the aperture forward and aft ends are formed in the panel stationary portion 180, 1180 and extend longitudinally from the first longitudinal aperture end 310 to a second longitudinal aperture end 340, and
wherein the second longitudinal aperture end 340 is formed in the panel stationary portion 180, 1180 and extends transversely from the aperture forward end 320 to the aperture aft end 330.

5. The system of any one of claims 3 - 4, wherein:
a fastener 350, operationally connected to the panel stationary portion 180 between the aperture boundary 300 and the panel top end 140, is configured to engage the flap 220,
thereby securing the flap 220, within the aperture boundary 300 when the first living hinge 190 is in the flexed state 225a.

6. The system of any one of claims 4-5, wherein:
the aperture boundary 300 is formed between the first living hinge 190 and the panel top end 140; or
the aperture boundary 300 is formed between the first living hinge 190 and the panel bottom end 130.

7. The system of any one of claims 2-6, wherein:
the panel 110, transversely between the panel forward and aft ends 160, 170, defines a panel body portion 110a, and the panel aft end 170 defines a partial or full return portion 110b that extends at least partially in the depth direction 210 away from the panel body portion 110a, to thereby form at least a partial enclosure.

8. The system of claim 1, wherein:
the hinge grooves 1200 extend between the panel forward and aft ends,
thereby transversely dividing the panel between the flap 1220 and the panel stationary portion 1180.

9. The system of claim 8, wherein:
a second living hinge 1360 is formed in the flap 1220, located longitudinally between the first living hinge 1190 and the panel top end 1140, and extending between the panel forward and aft ends,
thereby longitudinally separating the flap 1220 into an inner flap 1370 that longitudinally extends between the first and second living hinges, and an outer flap 1380 that longitudinally extends between the first living hinge 1190 and the panel top end 1140,
wherein the first and second living hinges are configured in opposing directions.

10. The system of any one of claims 8-9, wherein:
the panel support 1230 is fixed to the panel stationary portion 1180 for securing the panel stationary portion 1180 in an upright orientation against the support structure;
the panel support 1230 defines a platform portion 1390 having a planar top surface 1400 extending: in the depth direction 1210 between a panel support inner end 1410 and a panel support outer end 1420; and in the transverse direction 1150 between a panel support forward end 1430 and a panel support aft end 1440; and
a panel support groove 1450 is formed in the planar top surface 1400,
wherein the panel support groove 1450 is recessed into the planar top surface 1400 in the longitudinal direction 1120 and extends in the planar top surface 1400 between the panel support forward and aft ends, and
wherein the panel bottom end 1130 is seated in the panel support groove 1450 and thereby secured to the panel support 1230.

11. The system of claim 10, wherein:
the panel support 1230 includes support legs 1460, defining forward support legs 1460a and aft support legs 1460b, connected to a longitudinal underside 1470 of the platform portion 1390 and extend longitudinally away from the platform portion 1390,
wherein the support legs 1460 are positioned such that the panel support 1230 is configured for bracing against the support structure.

12. The system of any one of the preceding claims, wherein:
except for the hinge grooves 200, 1200, the panel 110, 1110 has a constant thickness.

13. The system of any one of the preceding claims, wherein:
the panel 110, 1110 comprises a polycarbonate.

14. A method of forming a system 100, 1100 that defines a personal barrier, the method comprising:
forming a panel 110, 1100,
wherein the panel extends in a longitudinal direction 120, 1120 from a panel bottom end 130, 1130 to a panel top end 140, 1140, and in a transverse direction 150, 1150 from a panel forward end 160, 1160 to a panel aft end 170, 1170;
wherein forming the panel includes:
forming a panel stationary portion 180, 1180;
forming a first living hinge 190, 1190 connected to the panel stationary portion 180, 1180,
wherein the first living hinge 190, 1190 is longitudinally located between the panel top and bottom ends, and
wherein the first living hinge 190, 1190 includes hinge grooves 200, 1200 that: are inset in a depth direction 210, 1210 into the first living hinge 190, 1190; extend in the transverse direction 150, 1150; and are spaced apart from each other in the longitudinal direction 120, 1120; and
forming a flap 220, 1220 connected to the first living hinge 190, 1190,
wherein the first living hinge 190, 1190 is configured for being in a flexed state 225a, 1225a, whereby the flap 220, 1220 is pivoted against the panel stationary portion 180, 1180, and an unflexed state 225b, 1225b, whereby the flap 220, 1220 is planar with the panel stationary portion 180, 1180; and
operationally connecting a panel support 230, 1230 to, or forming the panel support 230, 1230 as part of, the panel stationary portion 180, 1180 for securing the panel stationary portion 180, 1180 to a support structure.

15. The method of claim 14, wherein:
except for the hinge grooves 200, 1200, the panel has a constant thickness; and
the panel comprises a polycarbonate.
